(19) Europäisches Patentamt

European Patent Office

Office européen des brevets

(11) **EP 0 844 826 B1**

(12) **EUROPEAN PATENT SPECIFICATION**

(45) Date of publication and mention
of the grant of the patent:
**07.06.2000 Bulletin 2000/23**

(21) Application number: **96927697.1**

(22) Date of filing: **06.08.1996**

(51) Int Cl.[7]: **A01N 43/653**
// (A01N43/653, 43:84, 43:40)

(86) International application number:
**PCT/EP96/03478**

(87) International publication number:
**WO 97/06686 (27.02.1997 Gazette 1997/10)**

(54) **MICROBICIDAL COMPOSITIONS**

MIKROBIZIDE ZUSAMMENSETZUNGEN

COMPOSITIONS MICROBICIDES

(84) Designated Contracting States:
**AT BE CH DE DK ES FI FR GB GR IE IT LI LU MC NL PT SE**

(30) Priority: **18.08.1995 CH 237295**

(43) Date of publication of application:
**03.06.1998 Bulletin 1998/23**

(73) Proprietors:
• **Novartis AG**
  **4058 Basel (CH)**
  Designated Contracting States:
  **BE CH DE DK ES FI FR GB GR IE IT LI LU MC NL PT SE**
• **Novartis-Erfindungen Verwaltungsgesellschaft m.b.H.**
  **1235 Wien (AT)**
  Designated Contracting States:
  **AT**

(72) Inventors:
• **KNAUF-BEITER, Gertrude**
  **D-79379 Müllheim (DE)**
• **KÜNG, Ruth, Beatrice**
  **CH-4123 Allschwil (CH)**

(56) References cited:
**DE-A- 4 309 272         DE-A- 4 343 176**

Remarks:
The file contains technical information submitted after the application was filed and not included in this specification

**Description**

The present invention relates to fungicidal mixtures having synergistically enhanced activity against fungi and to a method of using said mixtures for leaf, soil and dressing application. The compositions of this invention are based on two active components wherein the component (I) and (II) being in an amount producing a synergistic fungicidal effect, and, wherein component I is a compound selected from the group consisting of

(Ia) 1-[3-(4-tert-butylphenyl)-2-methylpropyl]piperidine ("Fenpropidin"; reference DE-2752135), and
(Ib)   cis-4[3-(4-tert-butylphenyl)-2-methylpropyl]-2,6-dimethylmorpholine   ("Fenpropimorph";   reference   DE-2752135),
or one of their salts or metal complexes each;
and component II is a compound selected from the group consisting of
(IIa) 5-(4-chlorobenzyl)-2,2-dimethyl-1-(1H-1,2,4-triazole-1-ylmethyl)cyclopentanol ("Metconazol"; reference EP-A-267778) and
(IIb) 2-(2,4-dichlorophenyl)-3-(1H-1,2,4-triazole-1-yl)propyl-1,1,2,2-tetrafluoroethyl ether ("Tetraconazol"; reference EP-A-234242),

or one of their salts or metal complexes each.

Such mixtures are superior to similar mixtures known from the literature.

Among the acids which can be used for the preparation of salts of the compounds of formulae Ia , Ib, IIa and IIb, the following merit mention:
Hydrohalic acid, typically hydrofluoric acid, hydrochloric acid, hydrobromic acid or hydriodic acid as well as sulfuric acid, phosphoric acid, nitric acid and organic acids, typically acetic acid, trifluoroacetic acid, trichloroacetic acid, propionic acid, glycolic acid, thiocyanic acid, lactic acid, succinic acid, citric acid, benzoic acid, cinnamic acid, oxalic acid, fumaric acid, benzenesulfonic acid, p-toluenesulfonic acid, methanesulfonic acid, salicylic acid, p-aminosalicylic acid, 2-phenoxybenzoic acid, 2-acetoxybenzoic acid or 1,2-naphthalene-disulfonic acid.
The term "salts" also embraces metal complexes of the basic components I and II. These complexes may contain only one component or also both components independently. It is also possible to prepare metal complexes by combining the two compounds I and II with each other to form a mixed complex.

Metal complexes consist of the basic organic molecule and an inorganic or organic metal salt, typically the halides, nitrates, sulfates, phosphates, acetates, trifluoroacetates, trichloroacetates, propionates, tartrates, sulfonates, salicylates, benzoates etc. of the elements of the second main group of the Periodic Table, e.g. calcium and magnesium, and of the third and fourth main group, e.g. aluminium, tin or lead, as well as of the first to the eighth subgroup, e.g. chromium, manganese, iron, cobalt, nickel, copper, zinc and others. The elements of the subgroup of the 4th period are preferred. The metals may be present in the diffferent valency forms accorded to them. The metal complexes can be mononuclear or polynuclear, i.e. they can contain one or more than one organic molecular moiety as ligands.

It is also possible to add further agrochemically active substances to the compound mixture of this invention, typically insecticides, acaricides, nematicides, herbicides, growth regulators and fertilisers, but preferably further microbicides.

Surprisingly, it has now been found that the fungicidal action of the novel active ingredient combinations is substantially higher than the expected sum of the action of the single active ingredients. It has been found that the fungicidal compounds, used in the form of a mixture or one after the other, result in an abruptly enhanced action which is not only superior to that of the single components but which is markedly superadditive in the sense of a synergism. Accordingly, there is an unforeseeable synergistically enhanced activity and not only a complemented activity as could have been expected from the combination of two active ingredients. Accordingly, the novel combinations of active ingredients constitute an enrichment of the art.

This invention also relates to a method of controlling fungi, which comprises treating a locus that is already infested by fungi or is liable to such infestation in any order or simultaneously with an effective amount producing a synergistic fungicidal effect with a compound of formula I or a salt thereof and with a compound of formula II or a salt thereof, which salts may also be chosen such that both active ingredients are attached to an acid radical or, in the case of a metal complex, to a central metal cation. The synergistic effect is particularly marked in specific weight ratios of the active ingredients in the novel compound mixtures. However, the weight ratios of the compounds in the active ingredient combinations can vary within a relatively wide range depending on the application. Favourable mixture ratios of the two compounds are: I : II = 1 : 10 to 10 : 1, preferably I : II = 1 : 5 to 8 : 1, particularly preferably I : II = 1 : 3 to 6 : 1. Other favourable mixture ratios of I : II are, for example, 1 : 1, 4 : 1, 2 : 1, 3 : 2, 5 : 3. Corresponding amounts are suitable in the case of acid addition salts and metal complexes of the compounds.

The compound mixtures I + II of this invention have very advantageous curative, preventive and systemic fungicidal properties for protecting cultivated plants. Said compound mixtures can be used to inhibit or destroy microorganisms that occur on plants or parts of plants (fruit, blossoms, leaves, stems, tubers, roots) of different crops of useful plants, while at the same time protecting also those parts of the plants that grow later from the attack of such microorganisms. The compound mixtures can also be used as dressing agents for the treatment of plant propagation material, in particular of seeds (fruit, tubers, grains) and plant seedlings (e.g. rice) for the protection against fungus infections as well as against phytopathogenic fungi which occur in the soil. The compound mixtures of this invention are distinguished by being particularly well tolerated by plants and by being environmentally safe.

The compound mixtures are effective against the phytopathogenic fungi of the following classes: Ascomycetes (e.g. Venturia, Podosphaera, Erysiphe, Monilinia, Uncinula); Basidiomycetes (e.g. the species Hemileia, Rhizoctonia, Puccinia); Fungi imperfecti (e.g. Botrytis, Helminthosporium, Rhynchosporium, Fusarium, Septoria, Cercospora, Alternaria, Pyricularia and Pseudocercosporella herpotrichoides).
The compound mixtures of this invention are also particularly useful for controlling phylae which have developed a certain resistance against compounds of the triazole class. Within the scope of this invention, target crops for the areas of indication disclosed herein are, for example, the following plant species: cereals (wheat, barley, rye, oat), rice; sorghum and related species; beet (sugar beet and fodder beet); pomes, drupes and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa, groundnuts); cucumber plants (pumpkins, cucumbers, melons); fibre plants (cotton, flax, jute); citrus fruit (oranges, lemons, grapefruit, mandarins); vegetables (spinache, lettuce, asparagus, cabbages, carrots, onions, tomatoes, potatoes, paprika); lauraceae (avocado, cinnamomum, camphor) or plants such as corn, tobacco, nuts, coffee, sugar cane, tea, vines, hops, bananas and natural rubber plants, as well as ornamentals (flowers, shrubs, deciduous trees and coniferous trees such as conifers). This list is non-limitative.
The compound mixtures are particularly advantageous for applications in cereals and, very particularly, in wheat and barley.

The compound mixtures of formulae I and II are normally applied in the form of compositions. The compounds of formulae I and II can be applied to the crop area or plant to be treated simultaneously, or also in succession on the same day, if desired together with further carriers, surfactants or other application-promoting adjuvants customarily employed in the art of formulation.

Suitable carriers and adjuvants can be solid or liquid and correspond to the substances expediently employed in formulation technology, e.g. natural or regenerated mineral substances, solvents, dispersants, wetting agents, tackifiers, thickeners, binders or fertilisers.

A preferred method of applying a compound mixture containing at least one of these compounds I and II each, is their application to those parts of the plant which are above ground, in particular foliar application. The number of applications and the rate of application depend on the biological and climatic living conditions of the pathogen. However, the compounds can also enter the plant through the roots via the soil (systemic action) by drenching the locus of the plant with a liquid formulation or by applying the compounds in solid form to the soil, e.g. in granular form (soil application). The compounds of formulae I and II can also be applied to seeds for seed treatment (coating) by drenching the tubers or grains either successively in a liquid formulation of a compound or by coating them with an already combined moist or dry formulation. In special cases other forms of application are also possible, for example the selective treatment of the buds or infructescences.

The compounds of the combination are used in unmodified form or, preferably, together with the adjuvants conventionally employed in the art of formulation and are accordingly processed in known manner to, for example, emulsifying concentrates, coatable pastes, directly sprayable or dilutable solutions, dilute emulsions, wettable powders, soluble powders, dusts, granulates, or also encapsulations in e.g. polymer substances. As with the nature of the compositions, the methods of application, such as spraying, atomising, dusting, scattering, coating or pouring, are chosen in accordance with the intended objectives and the prevailing circumstances. Advantageous rates of application of the compound mixture are normally from 50 g to 2 kg a.i./ha, preferably from 100 g to 1000 g a.i./ha. In the case of seed treatment the rates of application are from 0.5 g to 1000 g, preferably from 5 g to 100 g a.i. per 100 kg of seeds.

The formulations are prepared in known manner, typically by intimately mixing and/or grinding the compounds with extenders, e.g. solvents, solid carriers and, optionally, surfactants.

Suitable solvents may typically be: aromatic hydrocarbons, preferably the fractions containing 8 to 12 carbon atoms such as xylene mixtures or substituted naphthalenes; phthalates such as dibutyl or dioctyl phthalate; aliphatic hydrocarbons such as cyclohexane or paraffins; alcohols and glycols and their ethers and esters such as ethanol, diethylene glycol, 2-methoxyethanol or 2-ethoxyethanol; ketones such as cyclohexanone; strongly polar solvents such as N-methyl-2-pyrrolidone, dimethyl sulfoxide or dimethyl formamide; as well as vegetable oils or epoxidised vegetable oils such as epoxidised coconut oil or soybean oil; or water.
The solid carriers typically used for dusts and dispersible powders are usually natural mineral fillers such as calcite, talcum, kaolin, montmorillonite or attapulgite. To improve the physical properties it is also possible to add highly dispersed silicic acid or highly dispersed absorbent polymers. Suitable granulated adsorptive carriers are porous types, including pumice, broken brick, sepiolite or bentonite; and suitable nonsorbent carriers are materials such as calcite or sand. In addition, innumerable pregranulated materials of inorganic or organic origin may be used, especially dolomite or pulverised plant residues.

Depending on the compounds of formulae I and II to be formulated, suitable surfactants are nonionic, cationic and/or anionic surfactants having good emulsifying, dispersing and wetting properties. Surfactants will also be understood to include surfactant mixtures.

The surfactants customarily employed in the art of formulation are published, inter alia, in the following literature:

- "McCutcheon's Detergents and Emulsifiers Annual", MC Publishing Corp., Glen Rock, New Jersey,1988.
- M. and J. Ash, "Encyclopedia of Surfactants", Vol. I-III, Chemical Publishing Co., New York, 1980-1981.

Particularly advantageous application-promoting adjuvants are also natural or synthetic phospholipids of the series of the cephalins and lecithins, typically phosphatidyl ethanolamine, phosphatidyl serine, phosphatidyl glycerol, lysolecithin.

The agrochemical formulations will usually contain from 0.1 to 99 %, preferably from 0.1 to 95 %, of the compounds of formulae I and II; from 99.9 to 1 %, preferably from 99.9 to 5 %, of a solid or liquid adjuvant, and from 0 to 25 %, preferably from 0.1 to 25 %, of a surfactant.

Whereas it is preferred to formulate commercial products as concentrates, the end user will normally use dilute formulations.

Such (agro)chemical compositions form part of this invention.

The invention is illustrated by the following Examples in which the term "active ingredient" means a mixture of compound I and compound II in a specific mixture ratio.

| Formulation Examples | | | |
|---|---|---|---|
| Wettable powder | a) | b) | c) |
| active ingredient[I:II=3:2(a),1:2(b),4:1(c)] | 25 % | 50 % | 75 % |
| sodium ligninsulfonate | 5 % | 5 % | - |
| sodium laurylsulfate | 3 % | - | 5 % |
| sodium diisobutylnaphthalenesulfonate | - | 6 % | 10 % |
| octylphenol polyethylene glycol ether (7-8 mol ethylene oxide) | - | 2 % | - |
| highly dispersed silicic acid | 5 % | 10 % | 10 % |
| kaolin | 62 % | 27 % | - |

The active ingredient is thoroughly mixed with the adjuvants and the mixture is well ground in a suitable mill to give wettable powders which can be diluted with water to suspensions of any desired concentration.

| Emulsifiable concentrates | |
|---|---|
| active ingredient (Ia:IIa=1 : 1) | 10 % |
| octylphenol polyethylene glycol ether (4-5 mol ethylene oxide) | 3 % |
| calcium dodecylbenzenesulfonate | 3 % |
| castor oil polyglycol ether (35 mol ethylene oxide) | 4 % |
| cyclohexanone | 30 % |
| xylene mixture | 50 % |

Emulsions of any desired concentration for use in plant protection can be prepared by diluting such concentrates with water.

| Dusts | a) | b) | c) |
|---|---|---|---|
| active ingredient [I:II=4:1(a); 5:1(b) and 5:3(c)] | 5 % | 6 % | 4 % |

(continued)

| Dusts | a) | b) | c) |
|---|---|---|---|
| talcum | 95 % | - | - |
| kaolin | - | 94% | - |
| mineral fillers | - | - | 96 % |

Ready for use dusts are obtained by mixing the active ingredient with the carrier and grinding it in a suitable mill. Such powders can also be used as powder dressing for seeds.

| Extruder granulates | |
|---|---|
| active ingredient (Ib : IIb = 1 : 2) | 15 % |
| sodium ligninsulfonate | 2 % |
| carboxymethyl cellulose | 1 % |
| kaolin | 82 % |

The active ingredient is mixed with the adjuvants, ground and moistened with water. The mixture is extruded and then dried in a stream of air.

| Coated granulates | |
|---|---|
| active ingredient (Ia : IIb = 3 : 5%) | 8 % |
| polyethylene glycol (MW 200) | 3 % |
| kaolin | 82 % |
| (MW = molecular weight) | |

The finely ground active ingredient is uniformly applied in a mixer to the kaolin moistened with polyethylene glycol. Non-dusty coated granulates are obtained in this manner.

| Suspension concentrates | |
|---|---|
| active ingredient (Ib : IIa = 3 : 1) | 40 % |
| propylene glycol | 10 % |
| nonylphenol polyethylene glycol ether | 6 % |
| (15 mol ethylene oxide) | |
| sodium ligninsulfonate | 10 % |
| carboxymethyl cellulose | 1 % |
| silicone oil in the form of a 75% aqueous emulsion | 1 % |
| water | 32 % |

The finely ground active ingredient is intimately mixed with the adjuvants to give a suspension concentrate from which suspensions of any desired concentration can be prepared by dilution with water. Such dilute formulations can be used for treating living plants as well as plant propagation material and for protecting them against infestation by microorganism by spraying, pouring or dipping.

Biological Examples

Fungicides always have a synergistic effect whenever the fungicidal action of the combination of active ingredients is greater than the sum of the action of the individual fungicides.
The value E to be expected for a given compound combination, e.g. of two fungicides, is expressed by the so-called COLBY formula and can be calculated as follows (Colby,S.R. "Calculating synergistic and antagonistic responses of herbicide combination", Weeds, Vol. 15, pages 20-22; 1967) :

ppm =  milligrams of active ingredient (a.i.) per litre of spray mixture
X =  percentage action of fungicide I using p ppm of active ingredient

Y = percentage action of fungicide II using q ppm of active ingredient
E = the expected action of fungicides I+II using p+q ppm of active ingredient (additive action),

then according to Colby :

$$E = X + Y - X \cdot Y / 100$$

If the actually observed value (O) is greater than the expected value (E), then the action of the combination is superadditive, i.e. there is synergism.
In the following Examples the infestation of untreated plants equals 100 %, corresponding to 0 % action.

<u>B-1 : Action against Puccinia recondita on wheat</u>

7-day-old wheat plants are sprayed to drip point with a spray mixture prepared from a formulation of the fungicide or fungicide combination. After 24 hours, the treated plants are infected with a conidia suspension of the fungus. The treated plants are then incubated for 2 days at 90-100 % relative humidity and at 20°C and are then stood in a greenhouse for a further 7 days at 20/18°C. Evaluation of the fungus attack is made 7 days after infection. The compound mixture consisting of Fenpropidin (Ia) and Metconazol (IIa) in a mixture ratio of Ia : IIa from 1:10 to 10:1 achieves synergistic effects.

<u>B-2 : Action against Erysiphe graminis on barley</u>

7-day-old barley plants are sprayed to drip point with a spray mixture prepared from the formulation of the fungicide or fungicide combination. After 24 hours, the plants are inoculated with conidia of the fungus and are incubated at 20/18°C in a climatic chamber. Evaluation of the fungus attack is carried out after 10 days. The compound mixture consisting of Fenpropidin (Ia) and Metconazol (IIa) in a mixture ratio of Ia : IIa from 1:10 to 10:1 achieves synergistic effects (see Table).

<u>B-3 : Action against Pyrenophora teres on barley</u>

7-day-old barley plants are sprayed to drip point with a spray mixture prepared from the formulation of the fungicide or fungicide combination. After 1 day, the plants are inoculated with a spore suspension of Pyrenophora teres and incubated in a greenhouse at 21°C and 90-100 % humidity. Evaluation of the fungus attack is made after 1 week. The mixtures of this invention exhibit markedly synergistic effects.

<u>B-4 : Action against Septoria nodorum on wheat</u>

Wheat plants in the 3 leaf stage are sprayed with a wettable powder prepared from the fungicide or fungicide combination. After 24 hours, the treated plants are infected with a conidia suspension of the fungus. The plants are then incubated for 2 days at 90-100 % relative humidity and are then stood in a greenhouse at 20-24°C for a further 10 days. Evaluation of the fungus attack is made 13 days after infection. Less than 1% of the wheat plants are infested.

Table relating to B-2

| (Action against Erysiphe graminis) | | | | | |
|---|---|---|---|---|---|
| Test No. | g Active ingredient/ha | | Ratio | % Action calculated (E) | % Action found (O) |
| | Ia | IIa | | | |
| 1 (control) | - | - | - | - | 0 |
| 2 | 0.2 | - | - | - | 9.3 |
| 3 | 0.6 | - | - | - | 22.4 |
| 4 | - | 0.02 | - | - | 34.8 |
| 5 | - | 0.06 | - | - | 52.5 |
| 6 | - | 0.2 | - | - | 57.7 |
| 7 | - | 6 | - | - | 92.6 |
| 8 | 0.2 | 0.02 | 10:1 | 40.9 | 57.0 |

Table relating to B-2   (continued)

| (Action against Erysiphe graminis) | | | | |
|---|---|---|---|---|
| Test No. | g Active ingredient/ha | | Ratio | % Action calculated (E) | % Action found (O) |
| | Ia | IIa | | | |
| 9 | 0.2 | 0.06 | 3:1 | 57.0 | 71.2 |
| 10 | 0.6 | 0.06 | 10:1 | 63.2 | 73.9 |
| 11 | 0.6 | 0.2 | 3:1 | 67.2 | 79.9 |
| 12 | 0.6 | 6 | 1:10 | 94.2 | 100 |

**Claims**

1.  A phytomicrobicidal composition comprising at least two active components, wherein component I is a compound selected from the group consisting of

    (Ia) 1-[3-(4-tert-butylphenyl)-2-methylpropyl]piperidine ("Fenpropidin") and
    (Ib)  cis-4[3-(4-tert-butylphenyl)-2-methylpropyl]-2,6-dimethylmorpholine ("Fenpropimorph"), or one of their salts or metal complexes each;

    and component II is a compound selected from the group consisting of

    (IIa) 5-(4-chlorobenzyl)-2,2-dimethyl-1-(1 H-1,2,4-triazole-1-ylmethyl)cyclopentanol ("Metconazol"), and
    (IIb) 2-(2,4-dichlorophenyl)-3-(1 H-1,2,4-triazole-1 -yl)propyl-1,1,2,2-tetrafluoroethyl ether ("Tetraconazol"),

    or one of their salts or metal complexes each, wherein the compound (I) and (II) being in an amount producing a synergistic fungicidal effect.

2.  A composition according to claim 1, wherein component I is the compound Ia and wherein component II is the compound IIa.

3.  A composition according to claim 1, wherein component I is the compound Ia and wherein component II is the compound IIb.

4.  A composition according to claim 1, wherein component I is the compound Ib and wherein component II is the compound IIa.

5.  A composition according to claim 1, wherein component I is the compound Ib and wherein component II is the compound IIb.

6.  A composition according to claim 1, wherein the weight ratio of I : II = 1 : 10 to 10 : 1, preferably 1 : 5 to 5 : 1.

7.  A method of controlling and inhibiting fungi on plants, which comprises treating a locus infested, or liable to be infested, with fungi, in any order or simultaneously, with an effective amount producing a synergistic fungicidal effect of component I and component II as claimed in claim 1.

8.  A method according to claim 7, which comprises treating cereals.

9.  A method according to claim 7, which comprises treating seeds.

**Patentansprüche**

1.  Pflanzenmikrobizide Zusammensetzung, die mindestens zwei Wirkstoffkomponenten umfaßt, worin die Komponente I eine Verbindung ist, ausgewählt aus der Gruppe, die besteht aus

    (Ia) 1 - [3-(4-tert-Butylphenyl)-2-methylpropyl]-piperidin ("Fenpropidin"), und

(Ib) cis-4[3-(4-tert-Butylphenyl)-2-methylpropyl]-2,6-dimethylmorpholin ("Fenpropimorph"), oder jeweils eines der Salze oder Metallkomplexe,

und worin die Komponente II eine Verbindung ist, ausgewählt aus der Gruppe, die besteht aus

(IIa) 5-(4-Chlorbenzyl)-2,2-dimethyl-1-(1H-1,2,4-triazol-1-yl-methyl)-cyclopentanol ("Metconazol"), und
(IIb) 2-(2,4-Dichlorphenyl)-3-(1H-1,2,4-triazol-1-yl)propyl-1,1,2,2-tetrafluorethylether ("Tetraconazol"),

oder jeweils eines der Salze oder Metallkomplexe, worin die Verbindungen (I) und (II) in einer Menge vorkommen, die eine synergistische fungizide Wirkung liefert.

2. Zusammensetzung gemäß Anspruch 1, worin die Komponente I die Verbindung Ia und die Komponente II die Verbindung IIa ist.

3. Zusammensetzung gemäß Anspruch 1, worin die Komponente I die Verbindung Ia und die Komponente II die Verbindung IIb ist.

4. Zusammensetzung gemäß Anspruch 1, worin die Komponente I die Verbindung Ib und die Komponente II die Verbindung IIa ist.

5. Zusammensetzung gemäß Anspruch 1, worin die Komponente I die Verbindung Ib und die Komponente II die Verbindung IIb ist.

6. Zusammensetzung gemäß Anspruch 1, worin das Gewichtsverhältnis von I:II gleich 1:10 bis 10:1, vorzugsweise 1:5 bis 5:1 ist.

7. Verfahren zur Bekämpfung und Hemmung von Pilzen auf Pflanzen, dadurch gekennzeichnet, daß man in beliebiger Reihenfolge oder gleichzeitig eine durch Pilze befallene oder gefährdete Stelle mit einer wirksamen Menge der Komponente I und der Komponente II gemäß Anspruch 1 unter Bildung einer synergistischen fungiziden Wirkung behandelt.

8. Verfahren gemäß Anspruch 7, dadurch gekennzeichnet, daß Getreide behandelt wird.

9. Verfahren gemäß Anspruch 7, dadurch gekennzeichnet, daß Saatgut behandelt wird.

**Revendications**

1. Composition phytomicrobicide comprenant au moins deux composants actifs, dans laquelle le composant I est un composé choisi dans le groupe constitué par

(Ia) la 1-[3-(4-tert-butylphényl)-2-méthylpropyl]pipéridine ("Fenpropidin") et
(Ib) la cis-4[3-(4-tert-butylphényl)-2-méthylpropyl]-2,6-diméthylmorpholine ("Fenpropimorph"),

ou à chaque fois un de leurs sels ou complexes métalliques ;
et le composant II est un composé choisi dans le groupe constitué par

(IIa) le 5-(4-chlorobenzyl)-2,2-diméthyl-1-(1H-1,2,4-triazole-1-ylméthyl)cyclopentanol ("Metconazol"), et
(IIb) l'éther 2-(2,4-dichlorophényl)-3-(1H-1,2,4-triazole-1-yl)propyl-1,1,2,2-tétrafluoroéthylique ("Tetraconazol"),

ou à chaque fois un de leurs sels ou complexes métalliques,
et dans laquelle le composant (I) et le composant (II) sont en une quantité produisant un effet fongicide synergique.

2. Composition selon la revendication 1, dans laquelle le composant 1 est le composé Ia et dans laquelle le composant II est le composé IIa.

3. Composition selon la revendication 1, dans laquelle le composant 1 est le composé Ia et dans laquelle le composant II est le composé IIb.

**4.** Composition selon la revendication 1, dans laquelle le composant 1 est le composé Ib et dans laquelle le composant II est le composé IIa.

**5.** Composition selon la revendication 1, dans laquelle le composant 1 est le composé Ib et dans laquelle le composant II est le composé IIb.

**6.** Composition selon la revendication 1, dans laquelle le rapport pondéral de I : II est égal à 1 : 10 à 10 : 1, de préférence de 1 : 5 à 5 : 1.

**7.** Procédé pour combattre et inhiber les champignons sur les plantes, dans lequel on traite un locus infesté, ou susceptible d'être infesté, par des champignons, dans n'importe quel ordre ou simultanément, avec une quantité efficace pour produire un effet fongicide synergique du composant I et du composant II tels que revendiqués dans la revendication 1.

**8.** Procédé selon la revendication 7, dans lequel on traite des céréales.

**9.** Procédé selon la revendication 7, dans lequel on traite des semences.